# EUROPÄISCHE PATENTSCHRIFT

(11) **EP 0 518 922 B1**
(45) Veröffentlichungstag und Bekanntmachung des Hinweises auf die Patenterteilung: **19.01.1994**
(21) Anmeldenummer: 91905321.5
(22) Anmeldetag: 01.03.1991
(51) Int. Cl.: B62D 5/22, F15B 15/14

(54) **HYDRAULISCHES ZAHNSTANGENLENKGETRIEBE**
HYDRAULIC RACK STEERING GEAR
MECANISME HYDRAULIQUE DE DIRECTION A CREMAILLERE

(30) Priorität: 06.03.1990 DE 4006960
(43) Veröffentlichungstag der Anmeldung: 23.12.1992
(73) Patentinhaber: ZF FRIEDRICHSHAFEN Aktiengesellschaft, 88038 Friedrichshafen (DE)
(72) Erfinder: RIEGER, Wolfgang, D-7322 Donzdorf 2 (DE); BAREIS, Helmut, D-7071 Eschach (DE)
(74) Vertreter: Raue, Reimund
(86) Internationale Anmeldenummer: EP9100374
(87) Internationale Veröffentlichungsnummer: WO9113791

(56) Entgegenhaltungen:
- EP-A- 0 190 528
- EP-A- 0 269 905
- FR-A- 2 573 490
- GB-A- 2 176 160

## Beschreibung

Die Erfindung betrifft ein hydraulisches Zahnstangenlenkgetriebe mit einem Arbeitszylinder zur Aufnahme eines mit einer Zahnstange gleichachsig verbundenen Kolbens. Der Kolben unterteilt den Arbeitszylinder in wechselnd vom Druck beaufschlagte Druckräume. Die Enden des Arbeitszylinders sind durch Einsätze verschlossen. Für die Zufuhr des Drucköls sind in den Arbeitszylinder Leitungsanschlüsse eingeführt.

Zahnstangenlenkgetriebe dieser Bauart sind z. B. aus der DE-PS 24 06 566 bekannt. Solche Hydrolenkungen baut man überwiegend in kompakte Pkw mit im Motorraum beengten Einbauverhältnissen ein. Für die Zufuhr des Drucköls in die Druckräume sind durch den Arbeitszylinder und die Einsätze radial gerichtete Leitungsanschlüsse eingeschraubt. Die Leitungsanschlüsse sichern die Einsätze gleichzeitig gegen Verdrehen. Bei den beengten Raumverhältnissen im Motorraum können die aus dem Arbeitszylinder herausragenden Leitungsanschlüsse mit den zugehörigen Rohrleitungsbögen bei Einbau- und Reparaturarbeiten beträchtlich stören. Oft behindert auch das naheliegende Faltenbalgende den einen Leitungsanschluß, so daß man das Lenkgetriebe etwas verlängern muß. Der Erfindung liegt daher die Aufgabe zugrunde, einen sicheren und platzsparenden Anbau für die Leitungsanschlüsse am Arbeitszylinder zu finden. Diese Forderung soll sich mit geringen Umbaukosten erreichen lassen.

Die Lösung dieser Aufgabe ist im Merkmal des Anspruchs 1 enthalten. Eine weitere Lösung dieser Aufgabe ist im unabhängigen Anspruch 2 angegeben. Der Anspruch 3 enthält eine in Verbindung mit Anspruch 1 und 2 anwendbare vorteilhafte Weiterbildung. Der Anspruch 4 gibt eine zweckmäßige Ausgestaltung des Anspruchs 1 an.

Nach Anspruch 1 sind die Leitungsanschlüsse in den das freie Ende des Arbeitszylinders verschließenden Einsatz axial zum Arbeitszylinder eingeschraubt. Zur Axial- und Verdrehsicherung des Einsatzes greift ein T-förmiges Sicherungsblech mit seinen zueinander fluchtenden Armen in eine Ringnut des Einsatzes, während ein rechtwinklig abstehender kurzer Arm in eine Nut des Arbeitszylinders eingreift. Das Sicherungsblech selbst ist durch eine Schraube am Einsatz befestigt. Durch den Einbau der Leitungsanschlüsse an der Stirnseite im Zylindereinsatz erhält man vor dem Lenkgetriebe einen größeren Freiraum, wodurch der Motor und seine Hilfsantriebe besser zugänglich sind. Das Sicherungsblech bietet eine betriebssichere Möglichkeit, den Einsatz gegen Verdrehen festzulegen und eine genaue Lageeinstellung der Leitungsanschlüsse vorzunehmen. Außerdem sorgt das Sicherungsblech für eine spielfreie axiale Befestigung des Einsatzes nach innen. Das Sicherungsblech erfüllt also mehrere Funktionen gleichzeitig.

Nach Anspruch 2 ist es zweckmäßig, das Sicherungsblech zwischen den zueinander fluchtenden Armen nach außen, d. h. in Richtung auf den Schraubenkopf, aufzuwölben. Dadurch erhalt man bei beliebiger Toleranzlage der Einzelteile eine garantierte Anlage des Einsatzes an einem Festanschlag.

Eine sehr einfache und preiswerte Ausführung einer Sicherung des die Leitungsanschlüsse tragenden Zylindereinsatzes läßt sich durch eine Bundschraube nach Anspruch 3 verwirklichen. Hier erfolgt die axiale Sicherung nach innen und die Verdrehsicherung durch den Bund, der in einer kreisförmigen Aussparung des Arbeitszylinders anliegt. Durch diese Maßnahme läßt sich die exakte Position der Leitungsanschlüsse festlegen.

Da die beiden Leitungsanschlüsse an derselben Stirnseite des Arbeitszylinders anschließen, sieht man nach Anspruch 3 vorteilhaft einen doppelwandigen Arbeitszylinder vor, der aus einem Innen- und einem Außenrohr besteht. Der durch die beiden Rohre gebildete Ringspalt steht mit einem der beiden Leitungsanschlüsse in Verbindung und schließt an den auf der anderen Seite des Kolbens liegenden Druckraum an. Dadurch läßt sich besonders der radiale Raumbedarf des Zahnstangenlenkgetriebes klein halten.

Die Erfindung ist anhand von zwei in der Zeichnung dargestellten Ausführungsbeispielen näher erläutert. Es zeigen:
- Fig. 1: ein hydraulisches Zahnstangenlenkgetriebe in Ansicht;
- Fig. 2: einen vergrößerten Schnitt durch den Arbeitszylinder;
- Fig. 3: eine vergrößerte Ansicht in Richtung des Pfeiles III in Fig. 2;
- Fig. 4: einen Schnitt nach der Linie IV-IV in Fig. 3;
- Fig. 5: einen Teilschnitt nach der Linie V-V in Fig. 3;
- Fig. 6: eine Ansicht auf die Stirnseite einer weiteren Ausführung und
- Fig. 7: einen Teilschnitt nach der Linie VII-VII in Fig. 6.

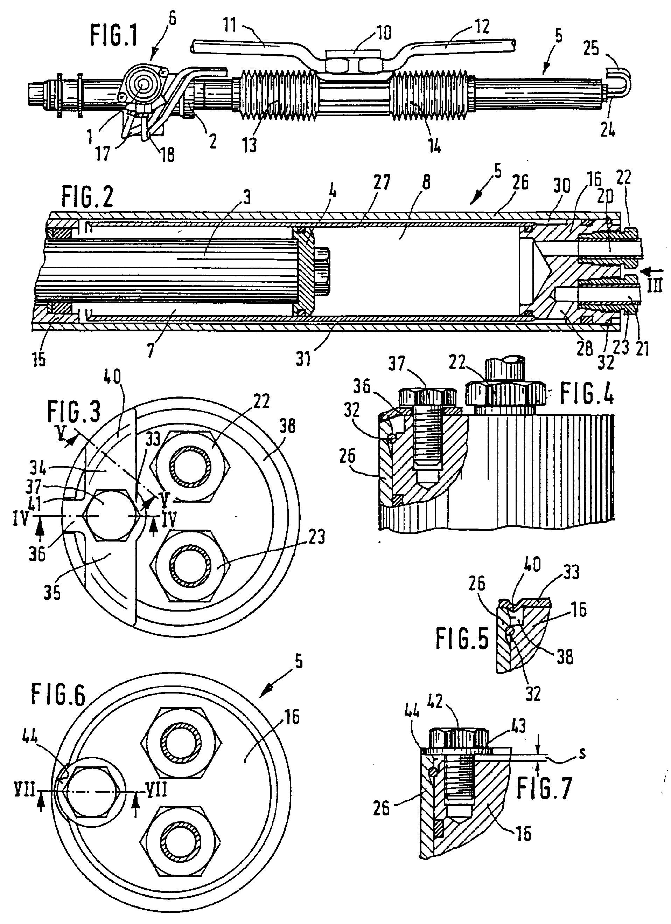

Nach Fig. 1 und 2 steht eine Lenkspindel 1 über ein nicht sichtbares Antriebsritzel mit einer in einem Lenkgehäuse 2 gelagerten, gleichfalls nicht sichtbaren Zahnstange im Eingriff. Die Zahnstange weist in ihrer Verlängerung eine Kolbenstange 3 auf, die einen Kolben 4 trägt, der in einem Arbeitszylinder 5 verschieblich angeordnet ist. Die Bewegung der Zahnstange unterstützt man durch von einem Lenkventil 6 in zwei Druckräume 7 und 8 des Arbeitszylinders 5 gesteuertes Drucköl. Die Kolbenstange 3 ist über einen sogenannten Mittenabtrieb 10 mit an Lenkhebel angeschlossenen Lenkstangen 11, 12 verbunden. Faltenbälge 13 und 14 decken den für den Durchtritt des Mittenabtriebs durchbrochenen Teil des Gehäuses 2 ab. Den Arbeitszylinder 5 verschließen Einsatze 15 und 16. Die Kolbenstange 3 führt durch den inneren Einsatz 15 öldicht hindurch. Rohrleitungen 17 und 18 bringen das Drucköl über Leitungsanschlüsse 20 - und 21 in den Druckraum 8 bzw. 7.

Nach der Erfindung sitzen beide Leitungsanschlüsse 20 und 21 versenkt im Einsatz 16 am freien Ende des Arbeitszylinders 5. Durch den versenkten Einbau beanspruchen außer Sechskanten von Rohrverschraubungen 22 und 23 nur noch Rohrbögen 24 und 25 geringen axialen Bauraum. Der Arbeitszylinder 5 besteht aus einem Außenrohr 26 und einem Innenrohr 27. Der eine Leitungsanschluß 20 steht unmittelbar mit dem vorderen Druckraum 8 und der andere Leitungsanschluß 21 über eine Schrägbohrung 28, einen daran anschließenden Ringraum 30 und einen Ringspalt 31 mit dem getriebeseitigen Druckraum 7 in Verbindung. Ein Drahtring 32 nimmt den auf den Einsatz 16 wirkenden hydraulischen Druck im Außenrohr 26 auf.

Die Sicherung des Einsatzes 16 nimmt man nach der Erfindung wie folgt vor:
Die Fig. 3 zeigt ein T-förmiges Sicherungsblech 33 mit zwei zueinander fluchtenden Armen 34 und 35 und einen weiteren rechtwinklig abstehenden, kurzen Arm 36. Mit einer Schraube 37 ist das Sicherungsblech 33 am Einsatz 16 gehalten. Die Arme 34 und 35 bewirken eine spielfreie axiale Festlegung des Einsatzes 16 nach innen. Dabei verhindert eine in Fig. 5 dargestellte, in eine nach außen offene Nut 38 eingreifende Anprägung 40 ein Verdrehen des Sicherungsblechs 33 um die Achse der Schraube 37. Der kurze Arm 36 greift abgewinkelt in eine Nut 41 des Außenrohrs 26 (Fig. 4) ein und sichert die Stellung in Verdrehrichtung. Um bei beliebiger Toleranzlage der Einzelteile eine garantierte Anlage des Einsatzes 16 am Drahtring 32 sicherzustellen, kann das Sicherungsblech zwischen den Armen 34 und 35 nach außen in Richtung auf den Kopf der Schraube 37 aufgewölbt sein.

Ein Losrütteln des Einsatzes, insbesondere durch Schwingungen, die vom Druckwechsel in den Rohrleitungen 17 und 18 ausgehen, läßt sich durch die spezielle Gestaltung des Sicherungsblechs 33 zuverlässig vermeiden.

In den Fig. 6 und 7 sieht man im Einsatz 16 für die axiale Sicherung nach innen und die Verdrehsicherung lediglich eine einzige Bundschraube 42 vor. Der Bund 43 stützt sich in einer entsprechenden kreisförmigen Aussparung 44 des Außenrohrs 26 ab. Die angrenzenden Bauteile gestaltet man hier so, daß zwischen der Stirnseite des Einsatzes 16 und der Schraubenkopfauflage ein Restspalt "S" erhalten bleibt. Auf diese Weise sichert man den Eingriff des Bundes 43 in die Ausfräsung über seine gesamte Höhe. Die Bundschraube 42 sichert man im Gewindebereich z. B. durch einen aushärtenden Kunststoff. Neben geringen Fertigungskosten lassen sich mit einer solchen Ausführung außerdem kurze Montagezeiten erzielen.

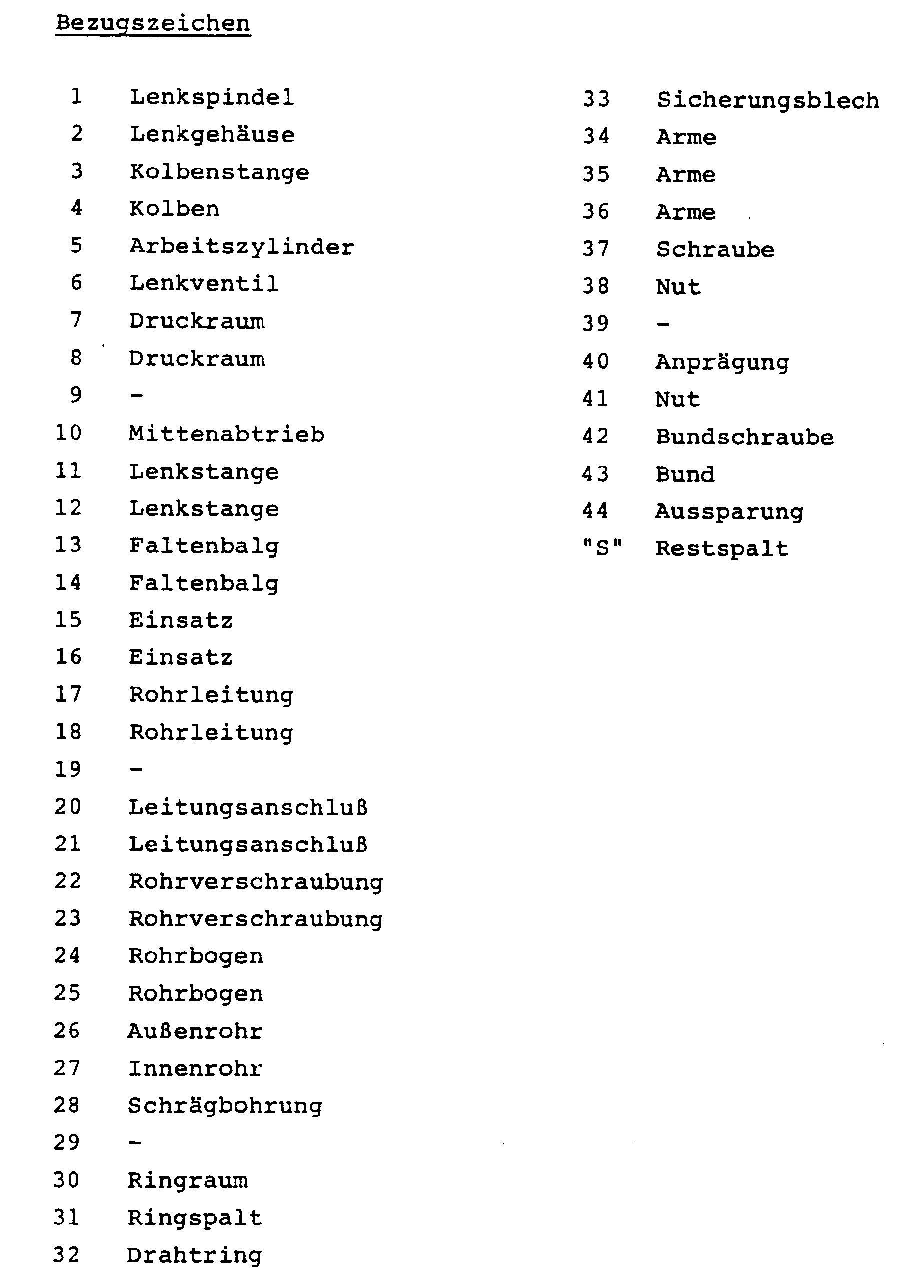

## Patentansprüche

1. Hydraulisches Zahnstangenlenkgetriebe mit folgenden Merkmalen:
- es ist ein Arbeitszylinder (5) zur Aufnahme eines mit einer Zahnstange gleichachsig verbundenen Kolbens (4) vorhanden;
- der Kolben (4) unterteilt den Arbeitszylinder (5) in wechselnd beaufschlagbare Druckräume (7, 8);
- die Enden des Arbeitszylinders (5) sind durch Einsätze (15, 16) verschlossen;
- in den Arbeitszylinder (5) führen Leitungsanschlüsse (20, 21) für die Zufuhr des Drucköls,
**gekennzeichnet** durch folgende Merkmale:
- die Leitungsanschlüsse (20, 21) sind beide in den das freie Ende des Arbeitzylinders (5) verschließenden Einsatz (16) axial zum Arbeitszylinder (5) eingeschraubt;
- ein T-förmiges Sicherungsblech (33) zur Axial- und Verdrehsicherung des das Freie Ende des Arbeitzylinders verschließenden Einsatzes (16) greift mit einem zueinander fluchtenden Armen (34 und 35) in eine Ringnut (38) dieses Einsatzes (16) ein, während ein winklig abstehender Arm (36) in eine Nut (41) des Arbeitszylinders (5) eingreift ;
- das Sicherungsblech (33) ist durch eine Schraube (37) am das Freie Ende des Arbeitzylinders verschließenden Einsatz (16) befestigt und
- der das Freie Ende des Arbeitzylinders verschließende Einsatz (16) stützt sich nach außen gegen einen Drahtring (32) ab.

2. Hydraulisches Zahnstangenlenkgetriebe nach Anspruch 1, dadurch **gekennzeichnet**, daß das Sicherungsblech (33) zwischen den zueinander fluchtenden Armen (34 und 35) in Richtung auf den Kopf der Schraube (37) aufgewölbt ist.

3. Hydraulisches Zahnstangenlenkgetriebe mit folgenden Merkmalen:
- es ist ein Arbeitszylinder (5) zur Aufnahme eines mit einer Zahnstange gleichachsig verbundenen Kolbens (4) vorhanden;
- der Kolben (4) unterteilt den Arbeitszylinder (5) in wechselnd beaufschlagbare Druckräume (7, 8);
- die Enden des Arbeitszylinders (5) sind durch Einsätze (15, 16) verschlossen;
- in den Arbeitszylinder (5) führen Leitungsanschlüsse (20, 21) für die Zufuhr des Drucköls
**gekennzeichnet** durch folgende Merkmale:
- die Leitungsanschlüsse (20, 21) sind beide in den das freie Ende des Arbeitszylinders (5) verschließenden Einsatz (16) axial zum Arbeitszylinder (5) eingeschraubt;
- zur Axial- und Verdrehsicherung sieht man eine in diesen Einsatz (16) eingeschraubte Bundschraube (42) vor, deren Bund (43) in eine kreisförmige Aussparung (44) des Arbeitszylinders (5) eingreift und
- der das Freie Ende des Arbeitzylinders verschließende Einsatz (16) stützt sich nach außen gegen einen Drahtring (32) ab.

4. Hydraulisches Zahnstangenlenkgetriebe nach Anspruch 1 und 2, **gekennzeichnet** durch folgende Merkmale:
- der Arbeitszylinder (5) besteht aus einem Außen- und einem Innenrohr (26 bzw. 27), wobei die beiden Rohre einen Ringspalt (31) bilden, der an einen (7) der beiden Druckräume angeschlossen ist und
- einer (21) der beiden Leitungsanschlüsse hat über eine Bohrung (28) und einen Ringraum (30) des Einsatzes (16) mit dem Ringspalt (31) Verbindung.

## Claims

1. Hydraulic rack steering gear having the following features:
- a working cylinder (5) is provided for receiving a piston (4) connected coaxially to a toothed rack;
- the piston (4) subdivides the working cylinder (5) into pressure chambers (7, 8) which may be alternately acted upon;
- the ends of the working cylinder (5) are closed by inserts (15, 16);
- line connections (20, 21) for supplying the pressure oil lead into the working cylinder (5),
characterized by the following features:
- the line connections (20, 21) are both screwed axially relative to the working cylinder (5) into the insert (16) which closes the free end of the working cylinder (5);
- to prevent axial and rotational movement of the insert (16) which closes the free end of the working cylinder, a T-shaped locking plate (33) engages with its aligned arms (34 and 35) into an annular groove (38) of said insert (16), while an arm (36) projecting at an angle engages into a groove (41) of the working cylinder (5);
- the locking plate (33) is fastened by a screw (37) to the insert (16) which closes the free end of the working cylinder and
- the insert (16) which closes the free end of the working cylinder is externally supported against a wire ring (32).

2. Hydraulic rack steering gear according to claim 1, characterized in that the locking plate (33) between the aligned arms (34 and 35) is arched towards the head of the screw (37).

3. Hydraulic rack steering gear having the following features:
- a working cylinder (5) is provided for receiving a piston (4) connected coaxially to a toothed rack;
- the piston (4) subdivides the working cylinder (5) into pressure chambers (7, 8) which may be alternately acted upon;
- the ends of the working cylinder (5) are closed by inserts (15, 16);
- line connections (20, 21) for supplying the pressure oil lead into the working cylinder (5),
characterized by the following features:
- the line connections (20, 21) are both screwed axially relative to the working cylinder (5) into the insert (16) which closes the free end of the working cylinder (5);
- to prevent axial and rotational movement, a collar screw (42) is provided, which is screwed into said insert (16) and whose collar (43) engages into a circular recess (44) of the working cylinder (5) and
- the insert (16) which closes the free end of the working cylinder is externally supported against a wire ring (32).

4. Hydraulic rack steering gear according to claim 1 and 2, characterized by the following features:
- the working cylinder (5) comprises an outer and an inner tube (26 and 27), the two tubes forming an annular gap (31) which is connected to one (7) of the two pressure chambers and
- one (21) of the two line connections communicates with the annular gap (31) via a bore (28) and an annular chamber (30) of the insert (16).

## Revendications

1. Mécanisme hydraulique de direction à crémaillère ayant les particularités suivantes :
- il est prévu un cylindre de travail (5) pour contenir un piston (4) raccordé coaxialement à une crémaillère;
- le piston (4) subdivise le cylindre (5) en chambres de pression (7, 8) susceptibles d'être sollicitées en alternance;
- les extrémités du cylindre (5) sont fermées par des bouchons (15, 16);
- des raccords de conduites (20, 21) pour l'amenée de l'huile sous pression conduisent à l'intérieur du cylindre (5),
**caractérisé** par les particularités suivantes :
- les raccords de conduites (20, 21) sont tous deux vissés dans la direction axiale du cylindre (5) dans le bouchon (16) fermant l'extrémité libre du cylindre (5);
- une plaque de blocage (33) en forme de T, destinée à bloquer axialement et en rotation le bouchon (16) fermant l'extrémité libre du cylindre, comporte deux branches mutuellement alignées (34 et 35) qui sont engagées dans une rainure annulaire (38) de ce bouchon (16), et une branche saillante angulairement (36) qui est engagée dans une rainure (41) du cylindre (5);
- la plaque de blocage (33) est fixée par une vis (37) au bouchon (16) fermant l'extrémité libre du cylindre et
- le bouchon (16) fermant l'extrémité libre du cylindre s'appuie en direction de l'extérieur contre une bague (32) en fil métallique.

2. Mécanisme hydraulique selon la revendication 1, **caractérisé** en ce que la plaque de blocage (33) est bombée du côté de la tête de la vis (37) entre les branches mutuellement alignées (34 et 35).

3. Mécanisme hydraulique de direction à crémaillère ayant les particularités suivantes :
- il est prévu un cylindre de travail (5) pour contenir un piston (4) raccordé coaxialement à une crémaillère;
- le piston (4) subdivise le cylindre (5) en chambres de pression (7, 8) susceptibles d'être sollicitées en alternance;
- les extrémités du cylindre (5) sont fermées par des bouchons (15, 16);
- des raccords de conduites (20, 21) pour l'amenée de l'huile sous pression conduisent à l'intérieur du cylindre (5),
**caractérisé** par les particularités suivantes :
- les raccords de conduites (20, 21) sont tous deux vissés dans la direction axiale du cylindre (5) dans le bouchon (16) fermant l'extrémité libre du cylindre (5);
- pour le blocage axial et de rotation, on prévoit une vis à collet (42) qui est vissée dans ce bouchon (16) et dont le collet (43) est engagé dans une échancrure circulaire (44) du cylindre (5), et
- le bouchon (16) fermant l'extrémité libre du cylindre s'appuie en direction de l'extérieur contre une bague (32) en fil métallique.

4. Mécanisme hydraulique selon la revendication 1 ou 2, **caractérisé** par les particularités suivantes :
- le cylindre (5) se compose d'un tube extérieur (26) et d'un tube intérieur (27), ces deux tubes définissant un intervalle annulaire (31) qui est raccordé à l'une (7) des deux chambres de pression, et
- l'un (21) des deux raccords de conduites communique avec l'intervalle annulaire (31) à travers un alésage (28) et une chambre annulaire (30) du bouchon (16).
